(19) **Europäisches Patentamt European Patent Office Office européen des brevets**

(11) **EP 2 689 163 B1**

(12) **EUROPEAN PATENT SPECIFICATION**

(45) Date of publication and mention of the grant of the patent:
**16.07.2014 Bulletin 2014/29**

(21) Application number: **11720346.3**

(22) Date of filing: **24.03.2011**

(51) Int Cl.:
*F03D 11/02* (2006.01)          *F16H 55/08* (2006.01)

(86) International application number:
**PCT/SI2011/000017**

(87) International publication number:
**WO 2012/128726 (27.09.2012 Gazette 2012/39)**

(54) **GEAR BOX FOR A WIND TURBINE**

GETRIEBE FÜR EINE WINDTURBINE

BOÎTE À ENGRENAGES DESTINÉE À UNE ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.01.2014 Bulletin 2014/05**

(73) Proprietors:
• **Hlebanja, Gorazd**
  **1000 Lubljana (SI)**
• **Hlebanja, Joze**
  **1000 Lubljana (SI)**

(72) Inventors:
• **Hlebanja, Gorazd**
  **1000 Lubljana (SI)**
• **Hlebanja, Joze**
  **1000 Lubljana (SI)**

(74) Representative: **Borstar, Dusan**
  **Nova ulica 11**
  **1230 Domzale (SI)**

(56) References cited:
  **GB-A- 1 509 570      US-A- 4 280 376**
  **US-A- 5 271 289**

# Description

The invention in question refers to a gear box for a wind turbine, namely a wind power plant gear box. The International Patent Classification (IPC) places these types of inventions from the field of mechanical engineering under devices for converting wind energy into mechanical work in order to transform it according to a specific purpose, more specifically to component parts, that is gear boxes of such devices.

The invention is based on a problem of how to design a wind power plant gear box in which despite transmission of high power, which may amount to over 3 MW, and at a low rotational velocity, usually lower than 30 revolutions/min, excessive wear resulting from considerable friction i.e. the so-called micro pitting, would be eliminated. In this way, a long-term operation of the wind power plant without any need of servicing and maintaining vital gear parts like a rotor gear box, becomes possible.

EP 1 045 140 B1 features a wind power plant gear box with a rotor and generator, where the gear box is a two-stage gear box comprising a driving level and a driven level. The driving level is the planetary gear box, which is directly connected to the rotor and contains double helical toothing. The driven level comprises helical planetary gears among which a sun gear is placed. Experts are aware of the fact that for such purposes involute gears are used. The planetary gear box of a wind power plant is connected to the rotor and is positioned at the top of the tower at the height of approximately 100 m from the base i.e. the foundation. It is for this reason that in addition to high investment costs of the plant itself, there are also considerable maintenance costs. Experience shows that despite attentive and precise gear boxes manufacture after a certain operation period, often only after approximately $10^6$ rotor rotations, results of increased friction and excessive wear i.e. micro pitting appear, especially where power is transmitted from planetary gears to the sun gear. This is the result of an operation under conditions of high power transmission at a low number of revolutions, which leads to high local loads at low relative velocities in involute teeth flanks in the dedendum area and therefore, to unfavourable conditions for lubrication. Investors would like the vital parts of a wind power plant to operate for 20 years, possibly with low maintenance and/or replacements. According to EP 1 045 140 B1 the solution includes using a double helical gear toothing combined with the system of forced lubrication that is connected to the circulation oil flow circuit, which is otherwise used for cooling the generator. Forced lubrication can to some extent alleviate or delay micro pitting but cannot entirely abolish it due to the teeth design. The effects of lubrication with a lubricant whose temperature and thus also viscosity depend on other factors are generally quite unpredictable, so the effectiveness of such a measure is in itself doubtful. Also, in order to ensure forced lubrication additional assemblies and parts would need to be built in the device bringing additional risks in terms of reliability of the device not only regarding the effectiveness of lubrication, but also in terms of unwanted occurrences e.g. oil escaping into the surrounding area. Therefore, it is still not possible to avoid occasional expensive and time-consuming maintenance work at high levels with simultaneous loss of power generation.

US 4 280 376 shows a further planetary gear box configured for optimal tooth profile contact.

According to the invention, the solution for the above mentioned problem is a gear box with the characteristics described in the patent claims. The invention in question is a wind power plant gear box i.e. a planetary gear box for high power transmission at a relatively low velocity with a stationary gear rim with inner teeth, at least three planetary gears which have a slowly rotating and for high power transmission designed main driving shaft. These planetary gears are designed to engage with a gear rim and the sun gear assembled with the driven shaft, where the sun gear is arranged between the planetary gears and adjusted for engaging with each one.

The invention presupposes that each of the gears, that is each of the planetary gears, the gear rim and the sun gear are equipped with teeth with the profile of the tooth flank where this profile is determined with the basic rack profile, which corresponds to the following equation

$$Y_{Pi} = a_p \left(1 - (1 - X_{Pi})^n\right) \qquad \text{(I)},$$

where it follows

$$a_p \times n = tg\alpha_0 \qquad \text{(II)},$$

where

| | |
|---|---|
| $X_{Pi}$ in $Y_{Pi}$ | are the coordinates of the rack flank profile (5) |
| $a_P$ | is the constant; |
| $n$ | is the curve exponent, |
| $\alpha_0$ | is the angle of tangent to |

In the preferential realization of the gear box according to the invention the said angle $\alpha_0$ is 70° ± 2° where the driving shaft is adapted for power transmission above 3 MW at rotational velocity below approximately 30 min$^{-1}$ on average, where the above mentioned gear box is equipped with teeth where in accordance with the equation (I) it follows:

$a_P = \mathbf{1,4}$ and n = **1,9625.**

Moreover, the gear box according to the invention can be either realized in such a way that each of the planetary gears, the gear rim and the sun gear are equipped with straight teeth i.e. with teeth that run parallel to the rotational axis of each gear, or alternatively each of the planetary gears, the gear rim and the sun gear may be equipped with helical teeth that is, with teeth that are helical to the gear rotational axis.

Below the invention is described in detail. An example of the realization is depicted in the enclosed sketches where figures show:

Fig. 1     schematically depicted planetary gear box of the wind power plant in front view;

Fig. 2     gear box from Fig. 1, here, schematically represented in the cross-sectioned side view;

Fig. 3     schematically depicted gear tooth flank of the gear box according to invention;

Fig. 4     sun gear in meshing with one of the planetary gears of the gear box according to invention;

Fig. 5     vectorial representation of the gear teeth flanks velocities of the gear box at the point of contact.

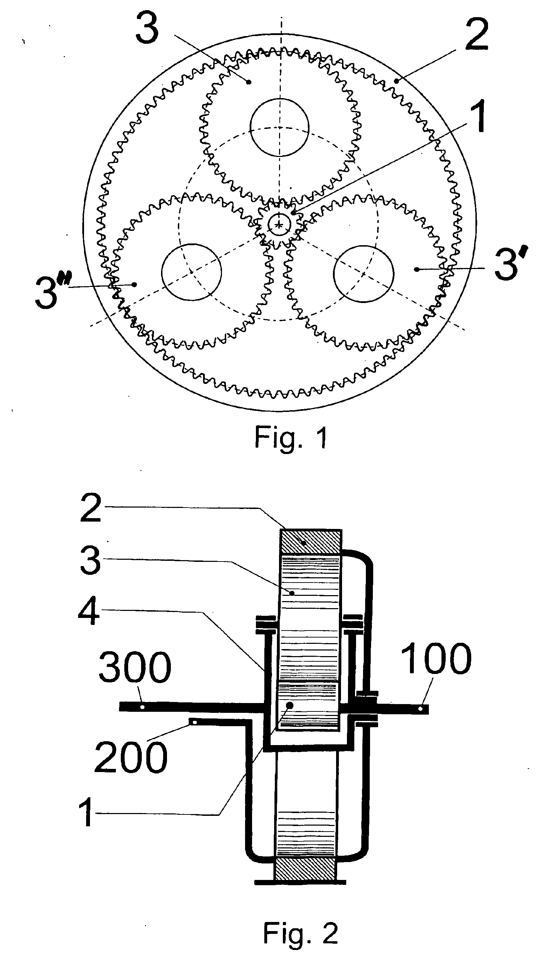

The wind power plant rotor gear box (Fig. 1 and 2) is designed as a planetary gear box with a driving shaft 300 and driven shaft 100. The driving shaft 300 is connected to the slow speed shaft of a rotor with blades of the wind power plant, which is not depicted in the figure and which creates a large rotational moment or power, which in practice amounts to at least 3 MW; optionally, the above mentioned rotor can be directly placed to the mentioned shaft 300. The driven shaft 100 is connected to the fast rotating shaft of the electric generator not depicted in the figure. The rotational assembly could be optionally put directly on the shaft 100.

In addition, the gear box in question comprises gear rim 2 with inner teeth connected with a further shaft 200, where the gear rim 2 is stationary during the operation of the wind power plant. It also includes at least three planetary gears 3, 3', 3", which are interconnected through carrier 4 and the driving shaft 300. These planetary gears are adjusted to engage with gear rim 2 and sun gear 1, which is connected to the driven shaft 100, arranged between planetary gears 3, 3', 3" and adjusted to engage with each one.

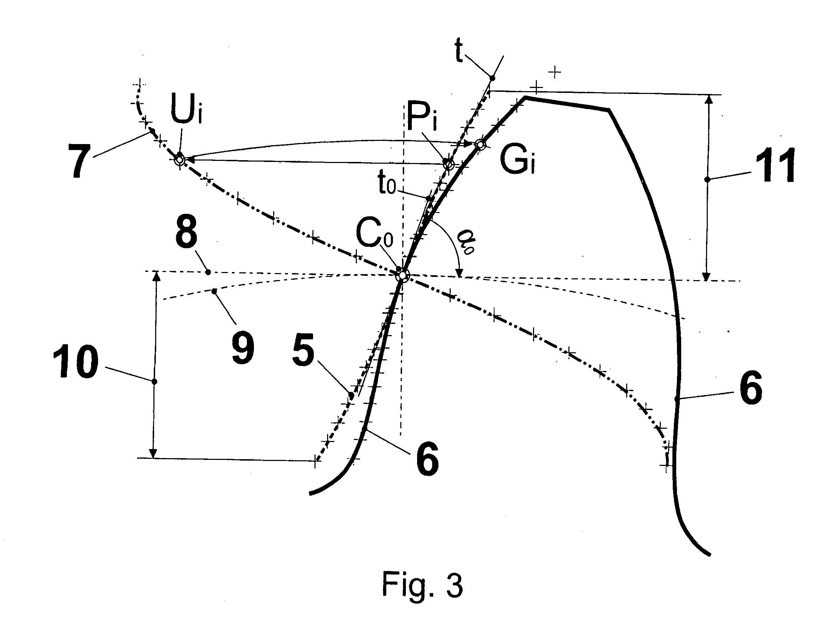

The invention solves the problem of micro pitting, so that every gear 1, 2, 3, 3', 3" i.e. every one of the planetary gears 3, 3', 3", gear rim 2 and sun gear 1 is equipped with teeth (Fig. 3) where the basic tooth flank profile 6 of each of the mentioned gears 1, 2, 3, 3', 3" is determined with the common rack profile 5, which corresponds to the following equation:

$$Y_{Pi} = a_p \left(1-(1-X_{Pi})^n\right) \qquad (I),$$

where

$X_{Pi}$ and $Y_{Pi}$     are the rack tooth flank coordinates (5)
$a_P$          is the constant;
$n$            is the curve exponent,

where for the purposes of wind power plant operation power transmission in the driving shaft 300 above 3 MW and rotational velocities of the shaft 300 amount to fewer than 30 rotations a minute, so less than 30 $min^{-1}$.

Fig. 3 shows the fit of rack tooth flank 5 and tooth flank 6 of any of the gears 1, 2, 3, 3', 3" of the planetary gear box of the invention which have a common path of contact 7. Tangent $t$ and unique points $U_i$ of the path of contact 7 and $G_i$ of the tooth flank 6 are defined for every point $P_i$ of the basic rack profile 5. Every rack profile regardless of the number of gear teeth 1, 2, 3, 3', 3" defines a single path of contact 7. Gears 1, 2, 3, 3', 3" with teeth according to the above equation (I) can have inner or outer teeth which can be straight or helical.

On arch $U_iG_i$ with radius $O\text{-}U_i$, where O is the centre of a particular gear 1, 2, 3, 3', 3", point $G_i$ which represents the point of the gear tooth flank 6 is determined. The rack's 5 datum line is in Fig. 3 depicted with position 8 where the pitch circle of the gear 1, 2, 3, 3', 3" is marked with 9; the rack 5 dedendum height is marked with 10 and the rack 5 addendum height with 11. Tangent $t$ on rack tooth flank 5 in point $C_0$ on the pitch circle 9 is marked with $t_0$ while the angle of tangent $t_0$ is marked with $\alpha_0$ and preferentially amounts to 70° ± 2°.

If is characteristic of the gear box toothing in question that the shape of the particular gear tooth flank 6 in the entire area of height 11 of the rack 5 dedendum and over the pitch point $C_0$ towards the rack 5 addendum 10 area is convex and becomes concave in shape only at the tooth 6 dedendum.

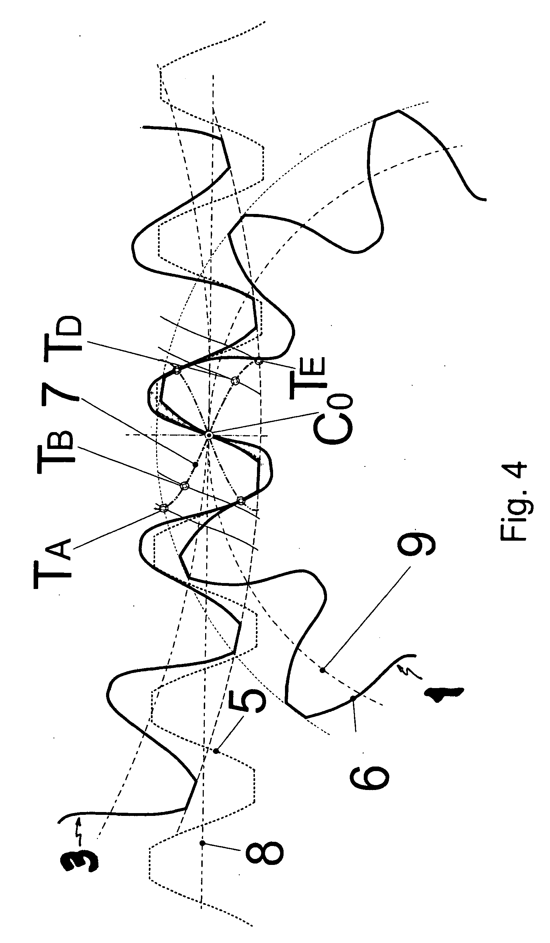

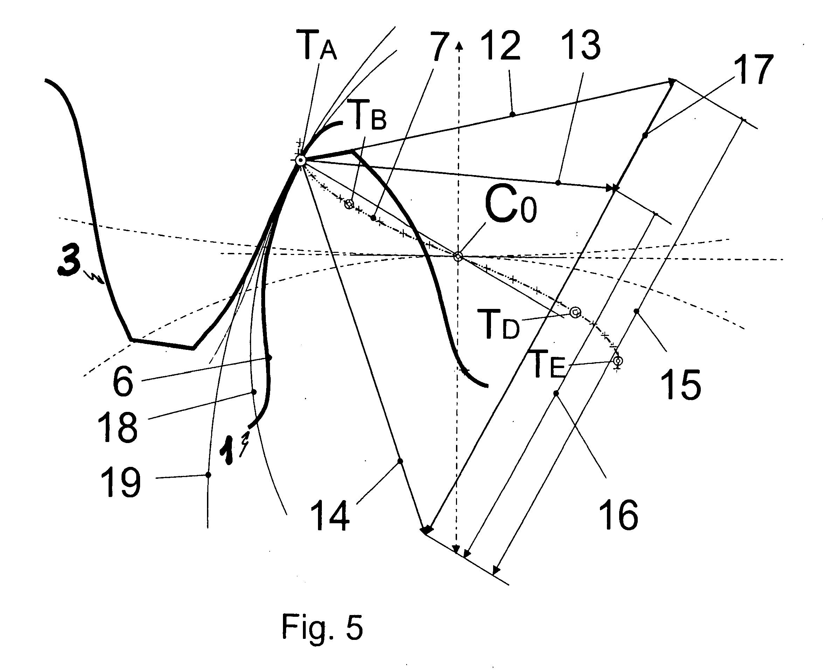

Fig. 4 also shows engaging between the planetary gear 3, 3', 3" and sun gear 1, which share a common rack 5 profile and the same path of contact 7. The contact of the teeth flanks between the driving and driven gear 1, 3 courses on the path of contact 7 and begins in point TA and finishes in TE. In sections between TA and TB and TD and TE two pairs of teeth 6 are meshing resulting in double meshing, while in the section between points TB, TC in TD only one pair of teeth 6 is meshing. As seen from Fig. 5, in the meshing start zone there is a convex 18 addendum 6 of one gear 1, 3 meshing with a concave dedendum 19 of mating planetary gear 1, 3' tooth 6, thus forming a convex-concave contact. Consequently, the contact pressure between each gear pair 1, 3 is then lower.

The gear teeth flank 6 velocities at the contact point between gears 1, 3 are also evident from Fig. 5 where 12 designates the vector of sun gear 1 absolute velocity and 13 is the planetary gear 3 absolute velocity, while vector 14 is the velocity of the contact point in the tangential direction to path of contact 7, therefore system velocity. A deciding influence on the quality of lubrication are the tangential components of velocity on teeth flanks 6, thus relative velocity 15 on tooth flank 6 of sun gear 1 and relative velocity 16 on tooth flank 6 of the planetary gear 3. The particular contact point between gears 1, 3 is moving along the path of contact 7 and its velocity is tangential to 7. Therefore, relative velocities i.e. tangential velocities in the direction of teeth flanks 6, in the zones of double meshing are considerably higher than with any other known gear boxes with involute teeth.

Toothing of gears 1, 2, 3, 3', 3" of the invention in question is realisable in analogous way as involute toothing with the tool that corresponds to the basic rack profile 5 and is therefore in accordance with the above mentioned equation (I).

While in gear boxes based on current technology where gears 1, 2, 3, 3', 3" are equipped with involute teeth and where in relatively high power transfer at relatively low rotational velocities of gears 1, 2, 3, 3', 3" on the teeth flanks of dedendum 6 very high local loads appear, the invention features a gear box where in the initial phase of the path of contact of teeth 6, teeth flanks loads are smaller due to the convex-concave fit. At the same time, relative velocities of teeth 6 are greater, which brings about better conditions for effective lubrication and prevention of direct metal contact of teeth flanks 6 and therefore also micro pitting. This means that in the case of the gear box in question in comparison to other known gear boxes with involute teeth, local loads on teeth flanks 6 are much smaller when exposed to the same external loads.

Using the teeth conforming to equation (I) allows for a lower number of non-undercut teeth 6, which under unchanged external dimensions enables higher gear ratios and vice versa; smaller external dimensions of wind power plant gear boxes in unchanged gear ratios. In addition, tooth height in gears 1, 2, 3, 3', 3" with teeth in accordance with equation (I) is lower than in the case of using involute teeth, so the bending loads of teeth 6 are smaller with the same external loads.

Achieving higher contact velocities while lowering contact pressure between teeth 6 each time mating gears 1, 2, 3, 3', 3" ensures better conditions for maintaining the necessary thickness of the lubricant and prevention of direct metal contact, which prevents micro pitting and warming of contact surfaces due to friction.

## Claims

1. Gear box for a wind turbine, namely a planetary gear box for transmission of relatively high power at relatively low rotational velocity, comprised of a stationary gear rim (2) with inner teeth and connected with the shaft (200), at least three with a slowly rotating and for high power transmission arranged driving shaft (300) jointed planetary gears (3, 3', 3"), which are engaged with the above mentioned gear rim (2) as well as among the planetary gears (3, 3', 3") centrally arranged sun gear (1), which is arranged to mesh with each of them, jointed with a driven shaft (100), **characterised in that** each of the above mentioned gears (1, 2, 3, 3', 3"), i.e. planetary gears (3, 3', 3"), gear rim (2) and sun gear (1), is equipped with teeth where the basic profile of teeth flanks (6) is determined with the basic rack profile (5) which is in accordance to equation

$$ Y_{Pi} = a_p \left(1-(1-X_{Pi})^n\right) \qquad (I), $$

where it follows

$$ a_p \times n = tg\alpha_0 \qquad (II), $$

where

$X_{Pi}$ and $Y_{Pi}$ are the coordinates of the rack flank profile (5)
$a_P$ is the constant;
$n$ is the curve exponent;
$\alpha_0$ is the angle of tangent to

2. Gear box according to claim 1, **characterized in that** angle $\alpha_0$ amounts to $70° \pm 2°$.

3. Gear box according to claim 1, **characterized in that** the driving shaft in question (300) is adapted for power transmission above 3 MW at rotational velocity of less than 30 $min^{-1}$ on average, and gears (1, 2, 3, 3', 3") are equipped with toothing in accordance with equation (I), wherein:

   $a_P = 1,4$ and $n = 1,9625.$

4. Gear box according to any of the claims 1 to 3, **characterized in that** each of the planetary gears (3, 3', 3"), the gear rim (2) and the sun gear (1) are equipped with straight toothing that is teeth (6), which are parallel to the rotational axis of a particular gear (1, 2, 3, 3', 3").

5. The gear box according to any of the claims 1 to 3, **characterized in that** each of the planetary gears (3, 3', 3"), the gear rim (2) and the sun gear (1) are equipped with helical teeth i.e. teeth (6), which are helical to the rotational axis of a particular gear (3, 3' 3").

## Patentansprüche

1. Zahnradgetriebe für Windkraftanlagen, und zwar ein Planetengetriebe zur Übertragung von relativ großen Kräften bei verhältnismäßig niedriger Geschwindigkeit, bestehend aus einem mit der Welle (200) verbundenen und während des Betriebs nicht drehenden Zahnkranz (2) mit innerer Verzahnung, mindestens drei langsam drehenden und mit der zur Übertragung von großen Kräften ausgelegten Antriebswelle (300) verbundenen Planetenrädern (3, 3', 3"), die zum Ineinandergreifen mit dem genannten Zahnkranz ausgelegt sind (2), sowie ein mit der Abtriebswelle (100) verbundenes Sonnenrad (1), das zwischen den genannten Planetenrädern (3, 3', 3") angeordnet und zum Ineinandergreifen mit jedem der Planetenräder ausgelegt ist, **gekennzeichnet dadurch, dass** jedes der genannten Zahnräder (1, 2, 3, 3', 3"), das heißt jedes der Planetenräder (3, 3', 3"), der Zahnkranz (2) und das Sonnenrad (1), mit einer Verzahnung ausgestattet sind, bei der das Grundprofil der Zahnflanke (6) durch das Bezugsprofil (5) der Zahnstange bestimmt ist, das der Gleichung

$$Y_{Pi} = a_p \left(1-(1-X_{Pi})^n\right) \qquad \text{(I)},$$

entspricht, wobei

$$a_p \times n = \text{tg}\,\alpha_0 \qquad \text{(II)},$$

gilt, wobei

$X_{Pi}$ und $Y_{Pi}$ die Koordinaten des Bezugsprofils (5) der Zahnstange,
$a_P$ eine Konstante,
$n$ den Kurvenexponenten und
$\alpha_0$ den Winkel der Tangente $t_0$ darstellen.

2. Das Zahnradgetriebe aus Anspruch 1, **gekennzeichnet dadurch, dass** der Winkel $\alpha_0$ 70° ± 2° beträgt.

3. Das Zahnradgetriebe aus Anspruch 1, **gekennzeichnet dadurch, dass** die genannte Antriebswelle (300) zur Übertragung von Kräften über 3 MW bei einer Drehgeschwindigkeit in einer Crrößenordnung von durchschnittlich weniger als etwa 30 min⁻¹ ausgelegt ist und die Zahnräder (1, 2, 3, 3', 3") mit einer Verzahnung ausgestattet sind, bei der in Übereinstimmung mit der Gleichung (I) Folgendes gilt:

$a_P$ = 1,4 und **n = 1,9625.**

4. Das Zahnradgetriebe aus jedem der Ansprüche 1-3, **gekennzeichnet dadurch, dass** jedes der Planetenräder (3, 3', 3"), der Zahnkranz (2) und das Sonnenrad (1) mit einer Geradverzahnung ausgestattet sind, und zwar mit einer Verzahnung (6), die parallel zur Rotationsachse des jeweiligen Zahnrades (1, 2, 3, 3', 3") verläuft.

5. Das Zahnradgetriebe aus jedem der Ansprüche 1-3, **gekennzeichnet dadurch, dass** jedes der Planetenräder (3, 3', 3"), der Zahnkranz (2) und das Sonnenrad (1) mit einer Schrägverzahnung ausgestattet sind, und zwar mit einer Verzahnung (6), die schräg zur Rotationsachse des jeweiligen Zahnrades (1, 2, 3, 3', 3") verläuft.

**Revendications**

1. Train d'engrenages d'une éolienne, à savoir un train planétaire pour la transmission de puissances élevées à une vitesse de rotation relativement faible, comprenant une couronne dentée fixe (2) à denture intérieure qui est reliée à un axe (200) et reste fixe lors du fonctionnement, au moins trois roues dentées planétaires (3, 3', 3") reliées à un axe d'entrainement (300) à rotation lente conçu pour transmettre des puissances élevées, lesquelles sont disposées pour s'engrener avec la couronne dentée susmentionnée (2) et avec une roue solaire (i) reliée à un arbre de sortie (100), qui est disposée entre les roues dentées planétaires (3, 3', 3") et agencée pour s'engrener avec chacune d'entre elles, **caractérisé en ce que** chacune des roues dentées susmentionnées (1, 2, 3, 3', 3"), c'est-à-dire chacune des roues dentées planétaires (3, 3', 3"), la couronne dentée (2) et la roue solaire (1), sont dotées d'une denture dont le profil de base des flancs des dents (6) est défini par le profil de base de la crémaillère (5), qui est conforme à l'équation

$$Y_{Pi} = a_p \left(1-(1-X_{Pi})^n\right) \qquad \text{(I)},$$

où l'équation suivante s'applique

$$a_p \times n = \text{tg}\,\alpha_0 \qquad \text{(II)},$$

où

$X_{Pi}$ et $Y_{Pi}$ représentent les coordonnées du profil des flancs de la crémaillère (5)
$a_P$ est une constante ;
$n$ est l'exposant de la courbe,
$\alpha_0$ est l'angle de la tangente $t_0$

2. L'entraînement à engrenages selon la revendication 1 **caractérisé en ce que** l'angle $\alpha_0$ est de 70° ± 2°.

3. L'entraînement à engrenages selon la revendication 1 **caractérisé en ce que** l'axe d'entraînement susmentionné (300) est prévu pour transmettre une puissance supérieure à 3 MW à une vitesse de rotation dont l'ordre de grandeur est en moyenne inférieur à environ 30 min⁻¹, les roues dentées (1, 2, 3, 3', 3") étant dotées de dentures caractérisées, conformément à l'équation (I), par :

$a_P$ = 1,4 et n = 1,9625.

4. L'entraînement à engrenages selon l'une quelconque des revendications 1 à 3 **caractérisé en ce que** chacune des roues planétaires (3, 3', 3"), la couronne dentée (2) et la roue solaire (1) sont dotées d'une denture droite, c'est-à-dire de dents (6) disposées parallèlement à l'axe de rotation de chaque roue dentée (1, 2, 3, 3', 3").

5. L'entraînement à engrenages selon l'une quelconque des revendications 1 à 3 **caractérisé en ce que** chacune des roues planétaires (3, 3', 3"), la couronne dentée (2) et la roue solaire (1) sont dotées d'une denture inclinée, c'est-à-dire de dents (6) disposées de façon inclinée par rapport à l'axe de rotation de chaque roue dentée (1, 2, 3, 3', 3").

Fig. 1

Fig. 2

Fig. 3

EP 2 689 163 B1

Fig. 4

Fig. 5

EP 2 689 163 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1045140 B1
- US 4280376 A